Europäisches Patentamt

European Patent Office

Office européen des brevets

(11) Veröffentlichungsnummer: **0 330 044 B1**

(12) **EUROPÄISCHE PATENTSCHRIFT**

(45) Veröffentlichungstag der Patentschrift: **21.10.92**

(51) Int. Cl.5: **H04L 12/28**, G06F 13/38

(21) Anmeldenummer: **89102449.9**

(22) Anmeldetag: **13.02.89**

(54) **Verfahren und Anordnung zum Datenaustausch zwischen einem Datenendgerät und mindestens einem peripheren Endgerät.**

(30) Priorität: **25.02.88 DE 3805978**

(43) Veröffentlichungstag der Anmeldung:
**30.08.89 Patentblatt 89/35**

(45) Bekanntmachung des Hinweises auf die
Patenterteilung:
**21.10.92 Patentblatt 92/43**

(84) Benannte Vertragsstaaten:
**AT BE CH DE FR GB LI**

(56) Entgegenhaltungen:
**US-A- 4 716 525**

**ELECTRONICS INTERNATIONAL, Band 55, Nr. 18, 8. September 1982, Seiten 145-150, New York, US; H.T. MEYER: "Hosts share peripherals on small-computer bus"**

**IBM TECHNICAL DISCLOSURE BULLETIN, Band 26, Nr. 7A, Dezember 1983, Seiten 3483-3484, New York, US; R.A. PASCOE: "Interconnecting devices of different communication protocols"**

**COMPUTER DESIGN, Band 23, Nr. 2, Februar 1984, Seiten 203-212, Winchester, Massachu-**

**setts, US; J.K. CHAY et al.: "A simple gateway for odd networks"**

**COMPUTER DESIGN, Band 27, Nr. 14, 1. August 1988, Seite 25, Littleton, MA, US; T. WILLIAMS: "SCSI adapter ties computers and peripherals into Ethernet"**

(73) Patentinhaber: **SIEMENS AKTIENGESELLSCHAFT**
**Wittelsbacherplatz 2**
**W-8000 München 2(DE)**

(72) Erfinder: **Dirschedl, Friedrich, Dipl.-Ing.**
**Schumacherring 29**
**W-8000 München 83(DE)**
Erfinder: **Scheiterer, Eduard, Dipl-Ing. Dr.**
**Steinmetzstrasse 13**
**W-8000 München 70(DE)**

EP 0 330 044 B1

**Beschreibung**

Die Erfindung betrifft ein Verfahren und eine Anordnung zum Datenaustausch zwischen einem Datenendgerät und mindestens einem peripheren Endgerät in einem lokalen, nach dem IEEE-Standard 802.3 strukturierten Netzwerk (Ethernet).

Die Spezifikation (draft proposed American National Standard for information systems December 16, 1985) "Small Computer System Interface (SCSI)" (ANSI X3T9. 2/82-2 Rev 17 B)" beschreibt die physikalischen und logischen Eigenschaften eines sogenannten SCSI-Busses sowie die Struktur sogenannter SCSI-Kommandos für periphere Endgeräte, die üblicherweise in Verbindung mit kleinen Computern verwendet werden.

Bekannt ist ein als Ethernet bezeichnetes lokales Netzwerk, das durch den IEEE-Standard 802.3 beschrieben wird (An American National Standard IEEE-Standards for Local Area Networks: Carrier Sense Multiple Access with Collision Detection (CSMA/CD) Access Method and Physical Layer Specifications, New York 1984).

Der Erfindung liegt die Aufgabe zugrunde, ein Verfahren der eingangs genannten Art anzugeben, das den Datenaustausch zwischen nach einem nach dem Ethernet-Stand 802.3 arbeitenden Datenendgerät und einem nach dem SCSI-Standard arbeitenden peripheren Endgerät in einfacher Weise ermöglicht.

Die Lösung dieser Aufgabe erfolgt erfindungsgemäß nach dem kennzeichnenden Teil des Patentanspruches 1.

Die zwischengeschaltete Schaltungsanordnung läßt den SCSI-Kommandoblock unverändert. Sie benötigt für den Datenaustausch weder Informationen über den Typ angeschlossener peripherer Geräte noch Informationen über spezifische Eigenschaften, wie beispielsweise Blocklängen von Speichereinrichtungen.

Die zwischengeschaltete Schaltungsanordnung läßt sich als virtuelles peripheres Endgerät adressieren. Diese Adressierung erleichtert die Ausgestaltung des Betriebsprogrammes sowohl des Datenendgerätes als auch der zwischengeschalteten Schaltungsanordnung.

Die Erfindung wird nun anhand der Zeichnungen beschrieben. Es zeigt

FIG 1     ein lokales Netzwerk Ethernet mit Datenendgeräten, peripheren Endgeräten und zwischengeschalteten Schaltungsanordnungen gemäß der Erfindung;

FIG 2     die Struktur der Schaltungsanordnung gemäß der Erfindung in Blockschaltbilddarstellung;

FIG 3     eine gegenüber FIG 2 detailliertere Blockschaltbilddarstellung der Schaltungsanordnung gemäß der Erfindung, und

FIG 4     das Format zwischen Datenendgerät und Schaltungsanordnung gemäß der Erfindung ausgetauschter Datenpakete.

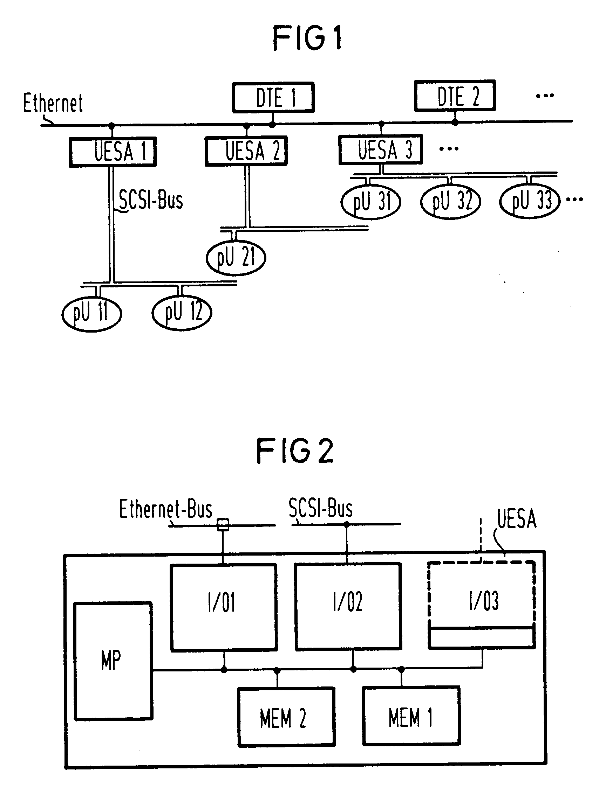

Das in Figur 1 dargestellte System besteht aus einem Ethernet-Bus mit Datenendgeräten DTE1 und DTE2. Über Schaltungsanordnungen UESA1, UESA2 und UESA3 stehen periphere Endgeräte pU11, pU12; p21 beziehungsweise pU31, pU32 und pU33 mit dem Ethernet-Bus in Verbindung. Die Verbindung zwischen den Schaltungsanordnungen UESA1, 2 und 3 und den zugeordneten peripheren Endgeräten erfolgt jeweils über einen sogennannten SCSI-Bus.

Die Schaltungsanordnung UESA gemäß der Erfindung besteht, wie in Figur 2 dargestellt, aus einem Mikroprozessor MP, mit dem durch einen Bus ein erster und zweiter Speicher MEM1, MEM2 sowie eine erste und zweite Ein-/Ausgabeeinheit I/O 1, I/O 2 verbunden ist. Im ersten Speicher MEM1 ist das Betriebsprogramm der Schaltungsanordnung UESA abgelegt. Der zweite Speicher MEM2 dient der Zwischenspeicherung von Daten, die der Schaltungsanordnung UESA von den Datenendgeräten DTE1, 2 ... n und den peripheren Endgeräten pU11, 12, 21, 31, 32, 33, ... zugeführt werden. Die Schaltungsanordnung UESA kann eine dritte Ein-/Ausgabeeinheit I/O 3 aufweisen, die dem Datenaustausch zwischen Datenendgeräten DTE1, 2 ... n und peripheren Endgeräten dient, die nicht nach dem SCSI-Protokoll arbeiten.

Als Mikroprozessor MP wird beispielsweise ein 8 Mhz-Prozessor der Firma INTEL mit der Produktbezeichnung: 80 186 und als erste Ein-/Ausgabeeinrichtung wird beispielsweise ein "Ethernet Coprocessor" mit der Produktbezeichnung: 82 586 der gleichen Firma verwendet. Angaben zu beiden Produkten finden sich in den von der Fa. INTEL 1985 herausgegebenen "APX 86/88, 186/188 User's Manual - Hardware Reference" und "iAPX 86/88, 186/188 User's Manual - Programmer's Reference" sowie in den von der Fa. INTEL 1986 herausgegebenen "Microcommunications Handbook".

Als zweite Ein-/Ausgabeeinheit I/O 2 wird beispielsweise ein "SCSI-Controller" der Fa. NCR mit der Produktbezeichnung 5386 verwendet. Angaben Hierzu enthält das von NCR Microelectronics Division, 1985 herausgegebene "NCR 5386 SCSI Protocol Controller - Data Sheet" sowie das 1983 herausgegebene " NCR 5385E/5386 SCSI Protocol Controller - User's Guide¨.

Als dritte Ein-/Ausgabeeinheit I/O 3 wird beispielsweise ein als iSBX-Baugruppe bezeichnetes Produkt der Fa. INTEL verwendet.

Als erster Speicher (MEM1) wird beispielsweise ein fest programmierbarer 128 kB-Speicher und als zweiter Speicher MEM2 ein 128 KB RAM-Speicher verwendet.

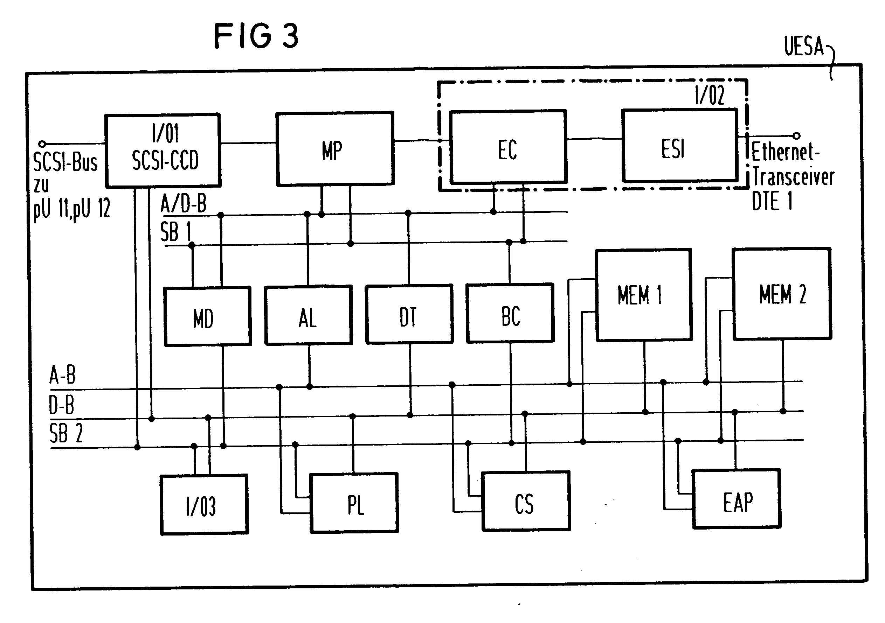

Die Hardwarestruktur der Schaltungsanordnung UESA kann insbesondere wie in Figur 3 dargestellt ausgebildet sein.

Figur 3 zeigt eine gegenüber Figur 2 detaillierte Blockschaltbilddarstellung der Schaltunganordnung UESA1.

Die mit "1" bezeichnete Klemme ist an den zu den peripheren Endgeräten pU11, pU12, ... führenden SCSI-Bus angeschlossen, die mit "2" bezeichnete Klemme ist an den die Datenendgeräte DTE1, DTE2, ... mit den Schaltungsanordnungen UESA1, UESA2, ... verbindenden Ethernet-Bus angeschlossen und steht somit mit den Sende-/Empfangsteilen (Transceiver) der Datenendgeräte DTE1, DTE2, ... in Verbindung.

Zwischen der Klemme "1" und der Klemme "2" sind eine SCSI-Steuer- und Geräte-Treiberschaltungsanordnung SCSI-CDD, ein Mikroprozessor MP, eine Ethernet-Steuer-Schaltung FC und eine Ethernet-Serien-Schnittstelle ESI angeordnet. Als SCSI-Steuer-und Geräte-Treiberschaltung SCSI-CDD wird beispielsweise das als "SCSI-Control and Device Driver" bezeichnete Produkt der Firma NCR mit der Nummer 5386/8310 verwendet, als Mikroprozessor MP ein Mikroprozessor der Firma INTEL mit der Nummer i80186, als Ethernet-Steuer-Schaltung EC das als "Ethernet-Controller" bezeichnete Produkt der Firma INTEL mit der Nummer i82586 und als Ethernet-Serien-Schnittstelle ESI das als "Ethernet-Serial-Interface" bezeichnete Produkt der Firma INTEL mit der Nummer i82506.

Der Mikroprozessor MP und die Ethernet-Steuer-Schaltung EC sind mit einem Adressen/Datenbus A/D und mit einem ersten Steuerbus SB1 verbunden.

Die Schaltungsanordnung UESA enthält einen Systembus, der aus einem Adreßbus A-B, einem Datenbus D-B und einem zweiten Steuerbus SB2 besteht. Mit dem Adreßbus A-B sind die Baugruppen AL, der erste und zweite Speicher MEM1, MEM2 verbunden. Mit dem Datenbus D-B sind die Baugruppen SCSI-CDD, DT und der erste und zweite Speicher MEM1, MEM2 verbunden. Mit dem zweiten Steuerbus SB2 sind die Baugruppen SCSI-CDD, MD, BC und der zweite Speicher MEM2 verbunden. Die Baugruppen I/O 3, PL, CS und EAP, deren Funktion noch beschrieben wird, sind mit den Bussen D-B, SB2; A-B, SB2, D-B verbunden.

In der nachfolgenden Übersicht sind Baugruppen und verwendete Produkte mit Firmenname und Produktbezeichnung angegeben:

| Baugruppe | Firma | Produktbezeichnung |
|---|---|---|
| SCSI-CCD | NCR | 5386/8310 |
| MP | INTEL | i80186 |
| EC | INTEL | i82586 |
| ESI | INTEL | i82501 |
| MD | AMD | P16R6A |
| AL | AMD | (2x)74ALS573 |
| DT | AMD | (2x)74ALS245A |
| BC | INTEL | i8287 |
| MEM1 | INTEL | (2x)i27512 |
|  |  | (2x)i27256 |
| MEM2 | Hitachi | (4x)HM6764 |
|  |  | (2/4x)HM67256 |
| I/O 3 | INTEL | iSBX-Baugruppe |
| PL | AMD | P22V10A |
| CS | AMD | 74ALS245A |
| EAP | AMD | 74S288 |

Die Ethernet-Steuerschaltung EC und die Ethernet-Serien-Schnittstelle ESI bilden die zweite Ein-/Ausgabeeinrichtung I/O 2. Der Speicheradreß-Decoder MD decodiert Adressen, die sich am Adreß-Datenbus A/D-B befinden und von dem Mikroprozessor MP beziehungsweise von der Ethernet-Steuerschaltung EC gebildet werden.

Der Mikroprozessor MP oder die Ethernet-Steuerschaltung EC geben diese Adressen für den Zugriff auf den ersten oder zweiten Speicher MEM1, MEM2 auf den Adreß-Datenbus A/D-B ab. Der höherwertige Teil jeder Adresse wird durch den Speicheradreßdecoder MD decodiert. Dieser erzeugt Selektionssignale für Bausteine der Speicher MEM1 und MEM2. Der niederwertige Teil einer jeden Adresse wird von dem Adreßregister AL festgehalten, da die Adresse auf dem Adreß-Datenbus A/D-B nach einer vorgegebenen

EP 0 330 044 B1

Zeit durch die Daten ersetzt werden: Der Mikroprozessor MP gibt in einem Multiplexbetrieb Adressen oder Daten an den Adreß-Datenbus A/D-B ab.

Die im Adreßregister festgehaltenen Adreßteile selektieren in dem durch den Speicherdecodierer MD ausgewählten Speicherbaustein eine Speicherstelle. Der Mikroprozessor MP oder die Ethernet-Steuerschaltung EC erzeugen eine Steuerinformation, die der Bus-Steuerschaltung BC zugeführt wird. Sie setzt die aufgenommene Steuerinformation in eine der Ansteuerung der Speicher MEM1, MEM2 konforme Steuerinformation um und gibt diese über den Steuerbus SB2 an die Speicher MEM1, MEM2 ab. In Abhängigkeit von dieser umgesetzten Steuerinformation werden die Nutzdaten bei einem Datenaustausch zwischen den Datenendgeräten DTE1, 2, ... und peripheren Endgeräten pU11, ... über den Datenpufferungsbaustein DT in den Speicher MEM2 eingeschrieben oder aus den Speichern MEM1 oder MEM2 abgerufen. Die programmierbare Register PL dient der optischen Signalisierung bestimmter Statusinformationen mittels Leuchtdioden. Zu diesen Statusinformationen gehören Informationen wie "Befehl in Ausführung", "Selbsttest in Ausführung", Selbsttest erfolgreich/nicht erfolgreich".

Die Komponente CS besteht aus einer vorgegebenen Anzahl von Hardware-Einzelschaltern, mit denen beispielsweise für die Einschaltung der Schaltungsanordnung UESA die Konfiguration bestimmt wird.

Der festprogrammierte Ethernet-Adreß-Speicher EAP enthält die weltweit eindeutige ethernet-konforme Adresse der Schaltungsanordnung UESA. Den Schaltungsanordnungen UESA1, ...n (Fig.1) sind n verschiedene, weltweit sonst nicht vergebene Adressen zugeordnet. Mit dem Inhalt dieses Speichers identifizieren die Schaltungsanordnungen UESA für sie bestimmte Datenpakete.

Die dritte Ein-/Ausgabeeinrichtung I/O 3, die in Fig. 2 gestrichelt eingezeichnet ist, kann wahlweise alternativ oder zusätzlich zu I/O 2 in die Schaltungsanordnung UESA aufgenommen werden und dient dann dazu, einen Datenaustausch von einem Datenendgerät DTE1 zu einem nicht in Fig. 2 dargestellten peripheren Endgerät zu realisieren, das nicht dem SCSI-Standard entspricht.

Im folgenden wird das erfindungsgemäße Verfahren zum Datenaustausch zwischen einem Datenendgerät DTE1 und einem peripheren Endgerät pU 11 in einem lokalen, nach dem IEEE-Standard 802.3 aufgebauten Netzwerk Ethernet beschrieben. Das Datenendgerät DTE1 ist unmittelbar an den Ethernet-Bus angekoppelt. Das periphere Endgerät pU11 ist über eine Schaltungsanordnung UESA1 mit dem Ethernet-Bus verbunden und arbeitet entsprechend der in der Beschreibungseinleitung genannten Spezifikationen "Small Computer System Interface (SCSI)".

Das Datenendgerät bildet zunächst ein Datenpaket "Media Access Control Frame" nach dem IEEE-Standard 802.3. Dieses Datenpaket umfaßt unter anderem eine Angabe der Zieladresse (DESTINATION ADDRESS) und der Quellenadresse (SOURCE ADDRESS) sowie ein als "LLC-DATA" bezeichnetes Feld. Als Zieladresse wird die der Schaltungsanordnung UESA 1 zugeordnete Adresse verwendet, als Quellenadresse wird die Adresse des Datenendgeräts DTE1 verwendet.

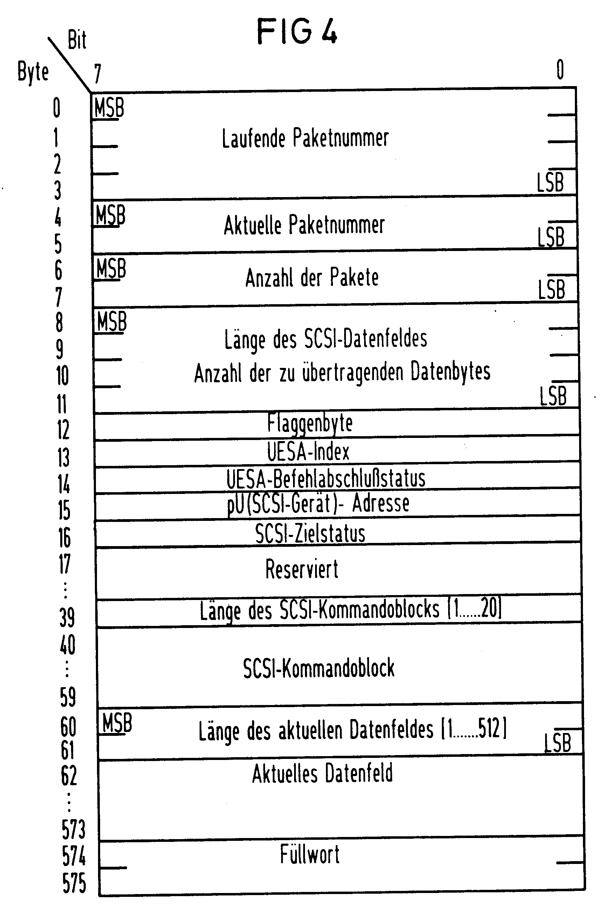

Das in dem nach dem IEEE-Standard 802.3 vorgesehene "LLC-DATA"-Feld wird entsprechend der Figur 4 dargestellten Struktur gebildet. Es besteht vorzugsweise aus 575 Bytes.

Die Bytes mit der Nummer 0 bis 3 repräsentieren die laufende Paketnummer, die Bytes 4 und 5 repräsentieren die aktuelle Paketnummer.

Die laufende Paketnummer wird von dem jeweils sendenden Gerät, das heißt von dem Datenendgerät DTE1 oder der Schaltungsanordnung UESA1 beginnend bei einem Neustart (nach Einschalten oder Rücksetzen) mit der Nummer 1 versehen und wird bei jedem Senden um eins erhöht. Mit der laufenden Paketnummer wird ein Identifizieren von Datenpaketen in dem Netzwerk Ethernet möglich, die zu einer gerade bearbeiteten Befehlfolge gehören. Die aktuelle Paketnummer bezeichnet die Reihenfolge der Pakete im Ablauf eines Befehls.

Die Bytes 6 und 7 bezeichnen die Anzahl der Pakete, die innerhalb eines Befehls vom Datenendgerät DTE1 zu der Schaltungsanordnung UESA1 beziehungsweise in Gegenrichtung von der Schaltungsanordnung UESA1 zum Datenendgerät 1 zu übertragen sind.

Die Bytes 8 bis 11 bezeichnen die Länge des SCSI-Datenfeldes, das heißt die Zahl der zu übertragenden Bytes. Die Länge des SCSI-Datenfeldes bezeichnet dabei die Anzahl in Bytes aller innerhalb eines Befehles innerhalb eines oder mehrerer in "aktuellen Datenfeldern" (vergleiche Bytes Nr. 62 - 573) zu übertragender Nutzdaten.

Das Byte Nr. 12 ist das sogenannte Flaggenbyte ("Flag Byte"), wobei das Bit 0 die Kommando-Richtung DTE1 - UESA1 beziehungsweise UESA1 - DTE1 bezeichnet.

Byte Nr. 13 stellt einen jeder Schaltungsanordnung UESA1, UESA2, UESA3 ... im jeweiligen Datenendgerät DTE1, DTE2 ... zugeordneten Index dar, der der Zieladresse (DESTINATION ADDRESS) in dem oben genannten "Media Access Control Frame" zugeordnet ist. Es dient zur Kontrolle des ordnungsgemäßen Datenaustausches im jeweiligen Datenendgerät.

Byte Nr. 14 bezeichnet in einem letzten von der Schaltungsanordnung UESA1 an das Datenendgerät

4

DTE1 zu übertragenden Datenpaket den erfolgreichen oder fehlerhaften Abschluß eines von der Schaltungsanordnung durchgeführten Befehls.

Byte Nr. 15 bezeichnet die Adresse der Schaltungsanordnung UESA1 (Adresse Nr. 7) beziehungsweise der an die Schaltungsanordnung UESA1 angeschlossenen beziehungsweise der anschließbaren peripheren Endgeräte pU11, pU12 ... pU17 (Adresse Nr. 0 bis 6).

Byte Nr. 16 bezeichnet in einem letzten von der Schaltungsanordnung UESA1 an das Datenendgerät DTE1 zu übertragenden Datenpaket den vom jeweiligen peripheren Endgerät pU11, pU17, ... gemäß SCSI-Standard gemeldeten Status.

Die Bytes Nr. 17 bis 38 werden bei der vorliegenden Ausführungsform nicht verwendet.

Das Byte Nr. 39 bezeichnet die Länge des SCSI-Kommandoblocks.

Die Bytes Nr. 40 bis 59 enthalten im ersten von einem Datenendgerät DTE1, ... an die Schaltungsanordnung UESA1 übermittelten Datenpaket den gemäß SCSI-Standard aufgebauten SCSI-Kommandoblock.

Die Bytes Nr. 60 und 61 bezeichnen die Länge des aktuellen Datenfeldes in diesem Datenpaket, das maximal 512 Bytes umfaßt.

Das aktuelle Datenfeld wird mit den Bytes Nr. 62 bis 573 eingetragen.

Die Bytes Nr. 574 und 575 dienen der Aufnahme eines Füllworts, das bei der vorliegenden Ausführungsform nicht verwendet wird.

"MSB" bedeutet höchstwertiges Bit und "LSB" bedeutet geringstwertiges Bit in einem Byte.

Im Falle einer Datenübertragung von dem Datenendgerät DTE1 zu dem peripheren Endgerät pU11 bildet das Datenendgerät DTE1 zunächst ein Datenpaket, das der oben beschriebenen Struktur entspricht. Dazu wird die aktuelle Paketnummer auf "1"gesetzt und die Anzahl des im Rahmen eines Befehls zu übertragenden Pakete angegeben. Außerdem wird die Länge des gesamten SCSI-Datenfeldes, das gegebenenfalls in mehreren Datenpaketen zu übertragen ist, eingetragen.

Im Flaggenbyte (Byte Nr. 12) wird die Richtung der Datenübertragung von dem Datenendgerät DTE1 an das periphere Endgerät pU11 angegeben. Zusätzlich wird der der Schaltungsanordnung UESA1 zugeordnete Index eingetragen, der von dem Steuerungsprogramm des DTE1 vergeben wird.

Die Felder "UESA-Befehlsabschlußstatus" und "SCSI-Zielstatus" sind nur für das letzte von der Schaltungsanordnung UESA1 an das Datenendgerät DTE1 zu übertragende Datenpaket vorgesehen, so daß bei diesem Beispiel der Datenübertragung vom Datenendgerät DTE1 zum peripheren Endgerät pU11 beide Felder nicht verwendet werden.

Außerdem gibt das Datenendgerät DTE1 die Adresse des emfangenden peripheren Endgeräts pU11 an (Byte Nr. 15: pU(SCSI-Gerät)-Adresse) und trägt den SCSI-Kommandoblock und dessen Länge in die zugehörigen Felder (Bytes Nr. 40 bis 59; 39) ein. Im vorliegenden Beispiel der Datenübertragung von dem Datenendgerät DTE1 zu dem peripheren Endgerät pU11 werden maximal die ersten 512 Bytes der zu übertragenden Nutzdaten und die entsprechende Länge in die zugehörigen Felder eingetragen.

Das Datenendgerät DTE1 sendet nun dieses erste Datenpaket an die Schaltungsanordnung UESA1, die das Datenpaket über die erste Ein-/Ausgabeeinrichtung I/O 1 aufnimmt. Die Einrichtung I/O 1 führt das Datenpaket dem Speicher MEM2 zu und meldet den dortigen Zugang an die Steuerung MP. Die Steuerung MP greift auf das abgespeicherte Datenpaket zu und führt die folgenden Überprüfungen durch: Zunächst stellt die Steuerung MP fest, daß das eingegangene Paket das erste Paket eines Befehls darstellt (Aktuelle Paketnummer = 1). Sofern die Anzahl der Pakete größer 1 ist, wartet die Schaltungsanordnung UESA1 den Zugang der in gleicher Weise von dem Datenendgerät DTE1 übermittelten Datenpakete ab, die ebenfalls über die erste Ein-/Ausgabeeinrichtung I/O 1 an den Speicher MEM2 weitergegeben werden. Die weiteren Datenpakete unterscheiden durch die jeweilige aktuelle Paketnummer und enthalten die folgenden Nutzdaten.

Nach dem Zugang aller Datenpakete in dem Speicher MEM2 leitet die Steuerung MP eine sogenannte, im SCSI-Protokoll festgelegte Arbitrierungsphase über die zweite Ein-/Ausgabeeinrichtung I/O 2 ein, um anschließend in einer Selektionsphase mit dem peripheren Endgerät pU11 eine Verbindung aufzubauen. Mit der sogenannten Arbitrierung wird gemäß dem SCSI-Standard der Schaltungsanordnung UESA 1 die alleinige Steuerung des an UESA1 angeschlossenen SCSI-Busses gewährt. In der Selektionsphase wird die pU11-Adresse aus dem ersten Datenpaket (Byte Nr. 15) an den SCSI-Bus angelegt und damit das periphere Endgerät pU11 ausgewählt. Das periphere Endgerät pU11 quittiert entsprechend dem SCSI-Standard die erfolgte Auswahl.

Anschließend übertragt die Steuerung MP über die zweite Ein-/Ausgabeeinrichtung I/O 2 den SCSI-Kommandoblock (Byte Nr. 40 bis 49), dessen Lange im Byte 39 angegeben ist. Die Steuerung MP verändert den SCSI-Kommandoblock in keiner Weise, sondern beschränkt sich darauf, diesen aus dem ersten Datenpaket zu entnehmen und nach Empfang aller Datenpakete an das periphere Endgerät pU11 weiterzuleiten. Alle für den Austausch von Kommandos und Daten zwischen der Schaltungsanordnung UESA1 und dem peripheren Endgerät pU11 notwendigen Informationen sind in dem ersten von dem Datenendgerät DTE1 übermittelten Datenpaket außerhalb des SCSI-Kommandoblocks enthalten. Diese Informationen sind die Information über die Anzahl der im Rahmen des Zugriffs des Datenendgerätes DTE1 auf das periphere Endgerät pU11 zu übertragenden, Folgenutzdaten enthaltende Datenpakete (Bytes Nr. 6 und 7), die durch das Flaggenbyte angegebene Datenrichtung (Byte Nr. 12) sowie die Adresse des peripheren Endgeräts pU11 (Byte Nr. 15). Die Entnahme dieser Informationen aus dem SCSI-Kommandoblock würde erfordern, daß die Schaltungsanordnung UESA1 den Typ des peripheren Endgeräts pU11 (Magnetplatte, optische Platte, Scanner, usw.) und spezifische Eigenschaften, wie zum Beispiel unterschiedliche, endgeräteindividuelle Blocklängen, in einer gesonderten Konfigurationsphase mitgeteilt bekommen müßte. Diese Konfiguration müßte für jeden Endgerätetyp und jedes Kommando, die diesen Endgerätetyp betrifft, erfolgen.

Nachdem die Übertragung des Kommandos von der Schaltungsanordnung UESA1 an das periphere Endgerät pU11 abgeschlossen ist, folgt die sogenannte Datenphase, in der die in dem Speicher MEM1 zwischengespeicherten Nutzdaten byteweise an das periphere Endgerät pU11 übertragen werden. Nachdem die übertragenen Nutzdaten von dem Endgerät pU11 gemäß dem Kommando bearbeitet wurden, sendet das Endgerät pU11 in einer Statusphase eine entsprechende Status-Information an die Schaltungsanordnung UESA1, die diese Information über die zweite Ein-/Ausgabeeinrichtung I/O 2 aufnimmt und im Speicher MEM2 zwischenspeichert.

Die Steuerung MP bildet ein Antwortpaket, entsprechend der oben anhand Fig. 4 beschriebenen Struktur. Dabei wird die oben genannte Status-Information im Feld "SCSI-Ziel-Status" (Byte 16) eingetragen. Zusätzlich wird ein UESA-Befehlsabschluß-Status erzeugt und in Byte Nr. 14 eingetragen. Die Steuerung MP trägt nach dem Ethernet-Standard Ziel- und Quellenadresse ein und beauftragt die erste Ein-/Ausgabeeinrichtung I/O 1 zur Übertragung des Gesamt-Datenpakets.

Das Datenendgerät DTE1 empfängt dieses Datenpaket und erhält damit eine Quittung für den Befehlsabschluß.

Wenn bei dem Ablauf des Befehls zwischen der Schaltungsanordnung UESA1 und peripheren Endgerät pU11 ein Fehler auftritt, erkennt die Steuerung MP diesen Fehler, bricht den Befehl ab und bildet für das Datenendgerät DTE1 ein Antwort-Datenpaket, in das ein entsprechender UESA-Befehlsabschluß-Status (Byte Nr. 14) eingetragen wird. Das Datenendgerät DTE1 erhält somit eine negative Quittung.

Der Abruf von im peripheren Endgerät pU11 abgespeicherter Nutzdaten zu dem Datenendgerät DTE1 erfolgt in analoger Weise. Er wird vom Datenendgerät DTE1 eingeleitet und bildet hierzu ein sogenanntes erstes Abruf-Datenpaket. Das erste Abruf-Datenpaket, daß das Datenendgerät DTE1 an die Schaltungsanordnung UESA1 übermittelt, enthält lediglich im Flaggenbyte die (Richtungs-)Information, daß Nutzdaten von einem Endgerät pU11, ... abzurufen sind, jedoch wie im Fall der Datenübertragung von Datenendgerät DTE1 an das periphere Endgerät pU11 keine Nutzdaten. Das Feld "Anzahl der Pakete" (Bytes Nr. 6 und 7) ist bei einem Abruf-Datenpaket immer gleich eins. Das Feld "Länge des SCSI-Datenfeldes" (Bytes Nr. 8 bis 11) spezifiziert die Anzahl der abzurufenden Nutzdatenbytes. Die Schaltungsanordnung UESA1 nimmt dieses Abruf-Datenpaket über die erste Ein-/Ausgabeeinrichtung I/O 1 auf und speichert es in dem Speicher MEM2 ab.

Die Steuerung MP greift auf dieses Abruf-Datenpaket zu, erkennt aufgrund des Flaggenbytes, daß es sich um ein Abruf-Datenpaket handelt und führt wie oben beschrieben die Arbitrierungs-, Selektions- und die Kommandophase durch. Auch in dieser Kommandophase verändert die Steuerung MP den SCSI-Kommandoblock nicht, sondern leitet ihn unverändert an das periphere Endgerät pU11 weiter. Für die Weiterleitung verwendet die Steuerung MP wiederum die Information in den Feldern "Länge des SCSI-Kommandoblocks" (Bytes 8 bis 11) und "pU (SCSI-Gerät)-Adresse" (Byte Nr. 15). Anschließend ruft sie in der Datenphase die Nutzdaten von dem ausgewählten peripheren Endgerät ab, speichert sie in dem Speicher MEM2 zwischen, verpackt sie in eine oder in mehrere ethernet-konforme Antwort-Datenpakete und beauftragt die erste Ein-/Ausgabeeinrichtung I/O 1 mit der Übermittlung der Datenpakete an das Datenendgerät DTE1. Die Anzahl der abzurufenden Nutzdatenbytes entnimmt die Steuerung MP dem Feld "Länge des SCSI-Datenfeldes" in dem vom Datenendgerät DTE1 übermittelten Abruf-Datenpaket.

Die Übermittlung der abgerufenen Nutzdaten von der Schaltungsanordnung UESA1 an das Datenendgerät DTE1 kann von der Steuerung MP jeweils nach Zugang sovieler Nutzdaten in der Schaltungsanordnung UESA1 eingeleitet werden, wie für ein aktuelles Datenfeld in einem ethernet-konformen Antwort-Datenpaket benötigt werden. Gleichzeitig mit der Übertragung dieses Antwort-Datenpaketes über die erste Ein-/Ausgabeeinrichtung I/O 1 an das Datenendgerät DTE1 können weitere Nutzdaten von dem peripheren Endgerät pU11 über die zweite Ein-/Ausgabeeinrichtung I/O 2 abgerufen werden.

Alternativ hierzu kann die Steuerung MP zunächst alle Nutzdaten von dem peripheren Endgerät pU11 abrufen und im Anschluß daran diese Nutzdaten verpackt in Antwort-Datenpaketen an das Datenendgerät DTE1 übermitteln.

Die oben im Zusammenhang mit der Datenübertragung von dem Datenendgerät DTE1 an das periphere Endgerät pU11 beschriebene positive oder negative Quittung wird in das letzte zu übertragene Datenpaket als UESA-Befehlsabschluß-Status Byte Nr. 14 beziehungsweise als SCSI-Ziel-Status (Byte Nr. 16) eingetragen.

Mit dem beschriebenen System läßt sich nicht nur ein Datenaustausch zwischen Datenendgeräten DTE1, 2, ...n und peripheren Endgeräten pU11, 12, ...33 in beiden Richtungen realisieren, sondern es ermöglicht einem Datenendgerät auch, Schaltungsanordnungen UESA steuernd zu konfigurieren, das heißt, die logischen Eigenschaften der Schaltungsanordnungen UESA gezielt zu beeinflussen. Zu den Konfigurierungskommandos gehört die Überprüfung der Verfügbarkeit der Schaltungsanordnungen UESA, die Durchführung von Diagnose funktionen in der Schaltungsanordnung UESA, der Abruf von detaillierten Status-Informationen nach mißglückter Kommunikation mit einem peripheren Endgerät, das Rücksetzen der Schaltungsanordnungen UESA (im Falle eines vermuteten Fehlerbetriebes) und die Reservierung je einer Schaltungsanordnung UESA für ein spezifisches Datenendgerät DTE1 bis zu einer Rücknahme der Reservierung durch ein explizites Freigabekommando.

Zur Konfigurierung der Schaltungsanordnung UESA1 bildet das Datenendgerät DTE1 ein Konfigurierungs-Datenpaket, dessen Struktur der oben anhand von Fig. 4 beschriebenen Struktur entspricht. In das Feld "Anzahl der Pakete" (Bytes Nr. 6 und 7) wird "1" gesetzt, wenn der Konfigurierungs-Befehl nur ein Datenpaket umfaßt. Das Flaggenbyte kann eine der beiden Richtungen, Datenendgerät DTE1-UESA1 oder die Gegenrichtung UESA1-Datenendgerät DTE1 bezeichnen. In der Richtung Datenendgerät DTE1-UESA1 können beispielsweise Konfigurierungs(nutz)daten übermittelt werden, in der Gegenrichtung UESA1-Datenendgerät DTE1 können beispielsweise Fehlerdiagnosedaten übermittelt werden, die unter Mitwirkung der Steuerung MP gebildet werden. Als pU(SCSI-Geräte)-Adresse wird anstelle der Adresse des Nutzdaten empfangenden oder sendenden peripheren Endgerätes pU11 beispielsweise die Adresse 7 der Schaltungsanordnung UESA1 verwendet.

Die Schaltungsanordnung UESA1 wird als somit als virtuelles peripheres Endgerät beispielsweise mit der Adresse 7 betrachtet. Diese Adressierung und der Informationsaustausch wie bei einem peripheren Endgerät pU11 erleichtert die Ausgestaltung des Betriebsprogrammes sowohl des Datenendgerätes DTE1 als auch der Schaltungsanordnung UESA1.

Das Datenendgerät DET1 übermittelt der Schaltungsanordnung UESA1 das Konfigurations-Datenpaket über die erste Ein-/Ausgabeeinrichtung I/O 1. Das Datenpaket wird in dem Speicher MEM abgelegt. Die Steuerung MP greift auf das Datenpaket zu und führt den durch den SCSI-Kommandoblock definierten Konfigurierungsbefehl aus. Anders als im Fall des Nutzdatenaustausches interpretiert die Steuerung MP nun den SCSI-Kommandoblock.

Das System nach den Figuren 1 bis 3 ermöglicht auch den Datenaustausch zwischen Datenendgeräten DTE1, DTE2, ... und peripheren Endgeräten, die eine andere als eine SCSI-Schnittstelle aufweisen. Dabei erfolgt der Datenaustausch zwischen Datenendgerät DTE1 und UESA1 beziehungsweise in der Gegenrichtung wie oben im Zusammenhang mit dem Datenaustausch zwischen Datenendgerät DTE1 und peripherem SCSI-Endgerät pU11 beschrieben. Das Datenendgerät DTE1 bildet also jeweils einen SCSI-Kommandoblock, der von der Steuerung MP der Schaltungsanordnung UESA1 aufgrund der (SCSI-Geräte) Adresse (Byte Nr. 15) interpretiert wird. Diese Adresse hat bei diesem Ausführungsbeispiel der Erfindung beispielsweise den Wert "6" Das im Speicher MEM1 abgelegte Betriebsprogramm der Steuerung HP ist so ausgebildet, daß sie SCSI-Kommandoblöcke in endgerätespezifische (nicht SCSI-)Kommandoblöcke umwandelt und besondere Steuerungskommandos für die Ansteuerung einer dritten endgerätespezifischen Ein-/Ausgabeeinrichtung I/O 3 bildet. Bei einem Abruf von Nutzdaten aus einem solchen peripheren Endgerät speichert die Steuerung MP der Schaltungsanordnung UESA1 die abgerufenen Nutzdaten im Speicher MEM 2 zwischen, verpackt diese in ein oder mehrere Anwort-Datenpakete nach Figur 4 und übermittelt diesen dem Datenendgerät DTE1.

## Patentansprüche

1. Verfahren zum Datenaustausch zwischen einem Datenendgerät (DTE1) und mindestens einem peripheren Endgerät (pU11) in einem lokalen, nach dem IEEE-Standard 802.3 strukturierten Netzwerk (Ethernet),

   **dadurch gekennzeichnet,**

   daß ein Datenendgerät (DTE1) zum Zugriff auf ein, nach dem "American Standard for information systems" "Small Computer System Interface (SCSI)" strukturiertes erstes peripheres Endgerät (pU11) einen von dem ersten peripheren Endgerät (pU11) auszuführenden Befehl umfassenden SCSI-Kommandoblock, eine die Richtung der Datenübertragung (Datenendgerät (DTE1) - erstes peripheres Endgerät (pU11) oder erstes peripheres Endgerät (pU11) - Datenendgerät (DTE1)) bezeichnende Information und eine die Adresse des ersten peripheren Endgeräts (pU11) bezeichnende Information bildet, den SCSI-Kommandoblock und die beiden Informationen sowie im Falle einer Datenübertragung von dem Datenendgerät (DTE1) zu dem ersten peripheren Endgerät (pU11) mindestens einen Teil der zu übertragenden Nutzdaten und eine ebenfalls gebildete Information über die Anzahl der im Rahmen dieses Zugriffs zu übertragenden, Folgenutzdaten enthaltende Datenpakete zu einem ersten Datenpaket verpackt, das erste Datenpaket an eine zwischen dem ersten Datenendgerät (DTE1) und dem ersten peripheren Endgerät (pU11) zwischengeschaltete, durch einen Mikroprozessor (MP) gesteuerte Schaltungsanordnung (UESA1) zuführt, die netzwerkseitig eine erste Ein-/Ausgabeeinrichtung (I/O 1) und eine mit dem peripheren Endgerät (pU11) in Verbindung stehende zweite Ein-/Ausgabeeinrichtung (I/O 2) aufweist,

daß die mikroprozessorgesteuerte Schaltungsanordnung (UESA1) das erste Datenpaket über die erste Ein-/Ausgabeeinrichtung (I/O 1) aufnimmt und einem in der mikroprozessorgesteuerten Schaltungsanordnung (UESA1) angeordneten Speicher (MEM2) zuführt und dort zwischenspeichert,

daß der Mikroprozessor (MP) auf das in dem Speicher (MEM2) zwischengespeicherte erste Datenpaket zugreift, entsprechend der Information über die Anzahl der im Rahmen dieses Zugriffs zu übertragenden Datenpakete die Verbindung zwischen der ersten Ein-/Ausgabeeinrichtung (I/O 1) zum Speicher (MEM2) freischaltet und, gegebenenfalls im Anschluß an die Aufnahme der Folgedatenpakete im Speicher (MEM2), den unveränderten SCSI-Kommandoblock mittels der Datenübertragungsrichtungsinformation und mittels der Adresseninformation sowie die Gesamtheit der Nutzdaten an das erste periphere Endgerät (pU11) über die zweite Ein-/Ausgabeeinrichtung (I/O 2) weiterleitet.

**2.** Verfahren nach Anspruch 1,
**dadurch gekennzeichnet,**
daß das Datenendgerät (DTE1) zum Zugriff auf das erste periphere Endgerät (pU11) zum dortigen Abruf von Nutzdaten ein erstes Abruf-Datenpaket mit einen dem Abruf entsprechenden SCSI-Kommandoblock, ein die Richtung der Datenübertragung (erstes peripheres Endgerät (pU11) - Datenendgerät (DTE1)), bezeichnende Information, die die Adresse des peripheren Endgeräts (pU11) bezeichnende Information bildet, das erste Abruf-Datenpaket der Schaltungsanordnung (UESA1) zuführt, die es über die erste Ein-/Ausgabeeinrichtung (I/O 1) aufnimmt und dem Speicher (MEM2) zuführt und dort zwischenspeichert,

daß der Mikroprozessor (MP) auf das in dem Speicher (MEM2) zwischengespeicherte erste Abruf-Datenpaket zugreift, den SCSI-Kommandoblock über die zweite Ein-/Ausgabeeinrichtung (I/O 2) an das erste periphere Endgerät (pU11) weiterleitet, von dort abgerufene Nutzdaten dem Speicher (MEM2) zuführt, ethernet-konforme Antwort-Datenpakete mit den abgerufenen Nutzdaten bildet und diese Antwort-Datenpakete dem Datenendgerät (DTE1) zuführt.

**3.** Schaltungsanordnung zum Datenaustausch zwischen einem Datenendgerät (DTE1) und mindestens einem peripheren Endgerät (pU11) in einem lokalen nach dem IEEE-Standard 802.3 aufgebauten Netzwerk (Ethernet),
**dadurch gekennzeichnet,**
daß die Schaltungsanordnung (UESA) ein Steuerwerk (MP) aufweist, einen der Aufnahme des Betriebsprogramms der Schaltungsanordnung (UESA) dienenden ersten Speicher (MEM1), einen der Aufnahme von Befehlen und der Zwischenspeicherung von Nutzdaten dienenden zweiten Speicher (MEM2), eine erste mit dem Netzwerk (Ethernet) in Verbindung stehende Ein-/Ausgabeeinrichtung (I/O 1) und eine über einen Bus (SCSI-Bus) mit peripheren Endgeräten (pU11, pU12) in Verbindung stehende zweite Ein-/Ausgabeeinrichtung (I/O 2), wobei Steuerwerk (MP), erster und zweiter Speicher (MEM1, MEM2) sowie erste und zweite Ein-/Ausgabeeinrichtung (I/O 1, I/O 2) über einen Systembus miteinander verbunden sind.

**4.** Schaltungsanordnung nach Anspruch 3,
**dadurch gekennzeichnet,**
daß sie anstelle oder zusätzlich zur zweiten Ein-/Ausgabeeinrichtung (I/O 2) eine mit peripheren, nicht nach SCSI-Standard strukturierten Endgeräten in Verbindung stehende dritte Ein-/Ausgabeeinrichtung (I/O 3) aufweist.

**Claims**

8

**1.** Method for exchanging data between a data terminal (DTE1) and at least one peripheral terminal (pU11) in a local area network (Ethernet) structured in accordance with IEEE standard 802.3, characterised in that a data terminal (DTE1), for accessing a first peripheral terminal (pU11) structured in accordance with the "American Standard for information systems" "Small Computer System Interface (SCSI)", forms an SCSI command block comprising a command to be executed by the first peripheral terminal (pU11), an information item designating the direction of data transmission (data terminal (DTE1) - first peripheral terminal (pU11) or first peripheral terminal (pU11) - data terminal (DTE1)), and an information designating the address of the first peripheral terminal (pU11), packages the SCSI command block and the two information items and, in the case of a data transmission from the data terminal (DTE1) to the first peripheral terminal (pU11), at least some of the user data to be transmitted and an information item, also formed, about the number of data packets to be transmitted during this access and containing subsequent user data, to form a first data packet, supplies the first data packet to a circuit arrangement (UESA1) controlled by a microprocessor (MP) and connected between the first data terminal (DTE1) and the first peripheral terminal (pU11), which circuit arrangement exhibits at the network end a first input/ output device (I/O 1) and a second input/output device (I/O 2) connected to the peripheral terminal (pU11),
in that the microprocessor-controlled circuit arrangement (UESA1) receives the first data packet via the first input/output device (I/O 1) and supplies it to a memory (MEM2) arranged in the microprocessor-controlled circuit arrangement (UESA1) and temporarily stores it there,
in that the microprocessor (MP) accesses the first data packet temporarily stored in the memory (MEM2), clears the connection between the first input/output device (I/O 1) to the memory (MEM2) in accordance with the information on the number of data packets to be transmitted during this access, and, if necessary following the reception of the subsequent data packets in the memory (MEM2), forwards the unchanged SCSI command block by means of the data transmission direction information and by means of the address information, and the totality of the user data, to the first peripheral terminal (pU11) via the second input/output device (I/O 2).

**2.** Method according to Claim 1, characterised in that the data terminal (DTE1) for accessing the first peripheral terminal (pU11) for calling up user data at that terminal supplies a first call-up data packet with an SCSI command block corresponding to the call-up, an information item designating the direction of data transmission (first peripheral terminal (pU11) - data terminal (DTE1)), which forms the information item designating the address of the peripheral terminal (pU11), to the circuit arrangement (UESA1) which receives it via the first input/output device (I/O 1) and supplies it to the memory (MEM2) and there temporarily stores it,
in that the microprocessor (MP) accesses the first call-up data packet temporarily stored in the memory (MEM2), forwards the SCSI command block via the second input/ output device (I/O 2) to the first peripheral terminal (pU11), supplies user data called up from there to the memory (MEM2), forms Ethernet-conformal response data packets with the called-up user data and supplies these response data packets to the data terminal (DTE1).

**3.** Circuit arrangement for exchanging data between a data terminal (DTE1) and at least one peripheral terminal (pU11) in a local area network (Ethernet) configured in accordance with IEEE standard 802.3, characterised in that the circuit arrangement (UESA) exhibits a control processor (MP), a first memory (MEM1) used for accommodating the operating program of the circuit arrangement (UESA), a second memory (MEM2) used for accommodating commands and temporarily storing user data, a first input/output device (I/O 1) connected to the network (Ethernet) and a second input/output device (I/O 2) connected via a bus (SCSI bus) to peripheral terminals (pU11, pU12), control processor (MP), first and second memory (MEM1, MEM2) and first and second input/output device (I/O 1, I/O 2) being connected to one another via a system bus.

**4.** Circuit arrangement according to Claim 3, characterised in that it exhibits, instead of or in addition to the second input/output device (I/O 2), a third input/output device (I/O 3) connected to peripheral terminals not structured in accordance with the SCSI standard.

**Revendications**

**1.** Procédé d'échange de données entre un terminal de transmission de données (DTE1) et au moins un terminal périphérique (pU11) dans un réseau local structuré selon la norme IEEE 802.3 (Ethernet), caractérisé par le fait

que pour accéder à un premier terminal périphérique (pU11) structuré selon la "American Standard for information systems" "Small Computer System Interface (SCSI)", un terminal de transmission de données (DTE1) forme un bloc de commande (SCIC) à exécuter par le premier terminal périphérique (pU11), une information indiquant le sens de la transmission de données (terminal de transmission de données (DTE1) - premier terminal périphérique (pU11) ou le premier terminal périphérique (pU11)- terminal de transmission de données (DTE1)) et une information désignant l'adresse du premier terminal périphérique (pU11), réunit le bloc de commande SCSI et les deux informations ainsi que, dans le cas d'une transmission de données d'un terminal de transmission de données (DTE1) au premier terminal périphérique (pU11), au moins une partie des données utiles devant être transmises et une information également formée et concernant le nombre de paquets de données devant être transmis dans le cadre de cet accès et contenant des données successives utiles, pour former un premier paquet de données, envoie le premier paquet de données à un circuit (UESA1) branché entre le premier terminal de transmission de données (DTE1) et le premier terminal périphérique (pU11) et commandé par un microprocesseur (MP) et qui possède, côté réseau, un premier dispositif d'entrée/sortie (I/O 1) et un second dispositif d'entrée/sortie (I/O 2), raccordé au terminal périphérique (pU11),

que le circuit (UESA1) commandé par le microprocesseur reçoit le premier paquet de données par l'intermédiaire du premier dispositif d'entrée/sortie (I/O 1) et l'envoie à et le mémorisé dans une mémoire (MEM2) disposée dans le circuit (UESA1) commandé par le microprocesseur,

que le microprocesseur (MP) a accès au premier paquet de données mémorisé temporairement dans la mémoire (MEM2), libère, en fonction de l'information concernant le nombre des paquets de données devant être transmis dans le cadre de cet accès, la liaison entre le premier dispositif d'entrée/sortie (I/O 1) et la mémoire (MEM2), et, éventuellement à la suite de la réception des paquets de données successifs dans la mémoire (MEM2), retransmet le bloc de commande SCSI inchangé, au moyen de l'information de direction du sens de transmission de données et au moyen de l'information d'adresses, ainsi que la totalité des données utiles, au premier terminal périphérique (pU11), par l'intermédiaire du second dispositif d'entrée/sortie (I/O 2).

2. Procédé suivant la revendication 1, caractérisé par le fait

que pour l'accès au premier terminal périphérique (pU11), en vue de l'appel, dans ce terminal, de données utiles, le terminal de transmission de données (DTE1) forme un premier paquet de données d'appel avec un bloc de commande SCSI correspondant à l'appel, une information caractérisant le sens de la transmission de données (premier terminal périphérique (pU11) - terminal de transmission de données (DTE1)), et l'information caractérisant l'adresse du terminal périphérique (pU11), envoie le premier paquet de données d'appel au circuit (UESA1), qui le reçoit par l'intermédiaire du premier dispositif d'entrée/sortie (I/O 1) et l'envoie à et le mémorise dans la mémoire (MEM2),

que le microprocesseur (MP) accède au premier paquet de données d'appel, qui est mémorisé temporairement dans la mémoire (MEM2), retransmet le bloc de commande SCSI par l'intermédiaire du second dispositif d'entrée/sortie (I/O 2) au premier terminal périphérique (pU11), envoie des données utiles, appelées à partir de cet appareil, à la mémoire (MEM2), forme des paquets de données de réponse, conformes au système Ethernet, avec les données utiles appelées et envoie ces paquets de données de réponse au terminal de transmission de données (DTE1).

3. Montage d'échange de données entre un terminal de transmission de données (DTE1) et au moins un terminal périphérique (pU11) dans un réseau local structuré selon la norme IEEE 802.3 (Ethernet), caractérisé par le fait

que le circuit (UESA) possède une unité de commande (MP), une première mémoire (MEM1) utilisée pour recevoir le programme de fonctionnement du circuit (UESA), une seconde mémoire (MEM2) utilisée pour recevoir des ordres et mémoriser temporairement des données utiles, un premier dispositif d'entrée/sortie (I/O 1), raccordé au réseau (Ethernet), et un second dispositif d'entrée/sortie (I/O 2) raccordé par l'intermédiaire d'un bus (SCSI-Bus) à des terminaux périphériques (pU11, pU12), l'unité de commande (MP), les première et seconde mémoires (MEM1, MEM2) ainsi que les premier et second dispositifs d'entrée/sortie (I/O 1, I/O 2) étant raccordés entre eux par l'intermédiaire d'un bus du système.

4. Montage suivant la revendication 3, caractérisé par le fait qu'il comporte, à la place ou en plus du second dispositif d'entrée/sortie (I/O 2), un troisième dispositif d'entrée/sortie (I/O 3) raccordé à des terminaux périphériques non structurés selon la norme SCSI.

# FIG 1

# FIG 2

FIG 3

UESA

I/02

I/01
SCSI-CCD

MP

EC

ESI

SCSI-Bus
zu
pU 11, pU 12

Ethernet-
Transceiver
DTE 1

A/D-B

SB 1

MD

AL

DT

BC

MEM 1

MEM 2

A-B

D-B

SB 2

I/03

PL

CS

EAP

EP 0 330 044 B1

# FIG 4

| | |
|---|---|
| Byte | Bit 7 ... 0 |
| 0<br>1<br>2<br>3 | MSB<br>Laufende Paketnummer<br>LSB |
| 4<br>5 | MSB Aktuelle Paketnummer LSB |
| 6<br>7 | MSB Anzahl der Pakete LSB |
| 8<br>9<br>10<br>11 | MSB<br>Länge des SCSI-Datenfeldes<br>Anzahl der zu übertragenden Datenbytes<br>LSB |
| 12 | Flaggenbyte |
| 13 | UESA-Index |
| 14 | UESA-Befehlabschlußstatus |
| 15 | pU(SCSI-Gerät)- Adresse |
| 16 | SCSI-Zielstatus |
| 17 | Reserviert |
| ⋮<br>39 | Länge des SCSI-Kommandoblocks [1......20] |
| 40<br>⋮<br>59 | SCSI-Kommandoblock |
| 60<br>61 | MSB Länge des aktuellen Datenfeldes [1.......512] LSB |
| 62<br>⋮<br>573 | Aktuelles Datenfeld |
| 574<br>575 | Füllwort |

14